# EUROPÄISCHE PATENTANMELDUNG

(11) **EP 3 875 691 A1**
(43) Veröffentlichungstag der Anmeldung: **08.09.2021**
(21) Anmeldenummer: 21154537.1
(22) Anmeldetag: 01.02.2021
(51) Int. Cl.: E02D 3/026, E01C 19/22, E01C 19/48, E01C 21/00, E01C 23/088, A01D 41/127, A01D 75/18, A01D 41/12, G01J 5/02, G01J 5/04, G01D 11/24, G01D 11/00

(54) **AUF EINEM UNTERGRUND VERFAHRBARE ARBEITSMASCHINE**

(30) Priorität: 02.03.2020 DE 102020105479
(71) Anmelder: Hamm AG, 95643 Tirschenreuth (DE)
(72) Erfinder: Bornemann, Detlef, 95666 Leonberg (DE); Völkel, Werner, 92660 Neustadt (DE); Gradl, Hermann, 95643 Tirschenreuth (DE); Schedl, Markus, 92715 Püchersreuth (DE)
(74) Vertreter: Ruttensperger Lachnit Trossin Gomoll

(57) **Zusammenfassung**

Eine auf einem Untergrund verfahrbare Arbeitsmaschine umfasst eine Sensoranordnung, wobei die Sensoranordnung umfasst:
- wenigstens ein Sensorgehäuse (24) mit einem über eine Erfassungsöffnung (30) offenen Sensoraufnahmeraum (26),
- wenigstens einen in dem Sensoraufnahmeraum (26) des wenigstens einen Sensorgehäuses (24) angeordneten Sensor (28),
- wenigstens eine Luftzuführanordnung (32) zum Erzeugen eines den Sensoraufnahmeraum (26) in dem wenigstens einen Sensorgehäuse (24) durchströmenden Luftstroms (L).

## Beschreibung

Die vorliegende Erfindung betrifft eine bei Durchführung eines Arbeitsvorgangs auf einem Untergrund verfahrbare Arbeitsmaschine, wie zum Beispiel einen Bodenverdichter zum Verdichten von Asphalt.

Bei der Durchführung derartiger Arbeitsvorgänge ist es vorteilhaft bzw. erforderlich, Information über Umgebungsparameter, wie zum Beispiel die Temperatur des durch einen Bodenverdichter zu verdichtenden Asphalts, zur Verfügung zu stellen. Zum Bereitstellen derartiger Information können an einer Arbeitsmaschine ein oder mehrere zur Erfassung der relevanten Parameter, wie zum Beispiel der Temperatur des zu verdichtenden Asphalts, geeignete Sensoren vorgesehen sein.

Es ist die Aufgabe der vorliegenden Erfindung, eine auf einem Untergrund verfahrbare Arbeitsmaschine bereitzustellen, bei welcher für die Durchführung eines Arbeitsvorgangs relevante Information präzise bereitgestellt werden kann.

Gemäß der vorliegenden Erfindung wird diese Aufgabe gelöst durch eine auf einem Untergrund verfahrbare Arbeitsmaschine, umfassend eine Sensoranordnung, wobei die Sensoranordnung umfasst:
- wenigstens ein Sensorgehäuse mit einem über eine Erfassungsöffnung offenen Sensoraufnahmeraum,
- wenigstens einen in dem Sensoraufnahmeraum des wenigstens einen Sensorgehäuses angeordneten Sensor,
- wenigstens eine Luftzuführanordnung zum Erzeugen eines den Sensoraufnahmeraum in dem wenigstens einen Sensorgehäuse durchströmenden Luftstroms.

Durch das Erzeugen eines Luftstroms, welcher das Volumen durchströmt, in dem ein Sensor angeordnet ist, wird dafür gesorgt, dass Verunreinigungen in diesem Volumen, also dem Sensoraufnahmeraum, sich nicht ansammeln können. Verunreinigungen, wie zum Beispiel Staubpartikel, Regentropfen oder dergleichen, werden durch den Luftstrom aus dem Sensoraufnahmeraum herausgetragen, so dass die Erfassungsgenauigkeit bzw. die Funktionalität eines in diesem Sensoraufnahmeraum angeordneten Sensors nicht durch in dem Sensoraufnahmeraum bzw. an dem Sensor sich ablagernde Partikel beeinträchtigt wird.

Zum Erzeugen des Luftstroms kann die wenigstens eine Luftzuführanordnung umfassen:
- einen Kompressor,
oder
- ein Gebläse,
oder
- einen Ventilator.

Um dafür zu sorgen, dass auch die durch die wenigstens eine Luftzuführanordnung in den Sensoraufnahmeraum geförderte Luft keine die Funktionalität eines Sensors beeinträchtigende Partikel enthält, kann einem Ansaugbereich der wenigstens einen Luftzuführanordnung ein Luftfilter zugeordnet sein.

Da die Gefahr des Eindringens von Verunreinigungen in den Sensoraufnahmeraum insbesondere im Bereich der Erfassungsöffnung besteht, also derjenigen Öffnung, durch welche hindurch der in einem derartigen Sensoraufnahmeraum angeordnete Sensor in Wechselwirkung mit der von diesem zu erfassenden Umgebung treten kann, wird weiter vorgeschlagen, dass wenigstens ein Teil des den Sensoraufnahmeraum durchströmenden Luftstroms, vorzugsweise der gesamte den Sensoraufnahmeraum durchströmende Luftstrom, den Sensoraufnahmeraum über die Erfassungsöffnung verlässt. Somit kann effizient dafür gesorgt werden, dass Verunreinigungen nicht über die Erfassungsöffnung in den Sensoraufnahmeraum eindringen können bzw. dass bereits aus einem Raumbereich vor der Erfassungsöffnung Verunreinigungspartikel weggeblasen werden.

Das Fernhalten von Verunreinigungspartikeln von einem Sensor kann weiter dadurch unterstützt werden, dass der wenigstens eine in dem Sensoraufnahmeraum angeordnete Sensor wenigstens bereichsweise von dem Luftstrom umströmbar ist.

Um auch dann, wenn die Arbeitsmaschine nicht in Betrieb ist, das Eindringen von Partikeln in einen Sensoraufnahmeraum zu verhindern, kann dem wenigstens einen Sensorgehäuse eine Abschlussklappe zum Verschließen der Erfassungsöffnung zugeordnet sein.

Dabei wird für eine baulich einfache Ausgestaltung vorgeschlagen, dass die Abschlussklappe in eine die Erfassungsöffnung verschließende Schließstellung vorgespannt ist und durch den Luftstrom in eine die Erfassungsöffnung freigebende Offenstellung verstellbar ist, wobei die Abschlussklappe durch ein Vorspannorgan, vorzugsweise Vorspannfeder, wie zum Beispiel Schenkelfeder, oder/und durch Schwerkraft in die Schließstellung vorgespannt sein kann.

Insbesondere dann, wenn die Arbeitsmaschine ein Bodenverdichter zum Verdichten von Asphalt ist, ist es vorteilhaft, wenn wenigstens ein Sensor ein Temperatursensor ist, da die Temperatur des zu verdichtenden Asphalts ein relevanter Parameter für die Art und Weise eines durchzuführenden Verdichtungsvorgangs ist.

Die Arbeitsmaschine kann beispielsweise ausgebildet sein als:
- Bodenbearbeitungsmaschine, wie zum Beispiel Bodenverdichter, Bodenfräse oder Asphaltiermaschine,
- landwirtschaftliche Maschine, wie zum Beispiel Traktor, Mähdrescher oder Häckselmaschine.

Die vorliegende Erfindung wird nachfolgend mit Bezug auf die beiliegenden Figuren detailliert beschrieben. Es zeigt:
- Fig. 1: eine als selbstfahrender Bodenverdichter ausgebildete Arbeitsmaschine;
- Fig. 2: in prinzipieller Darstellung eine Sensoranordnung für eine Arbeitsmaschine.

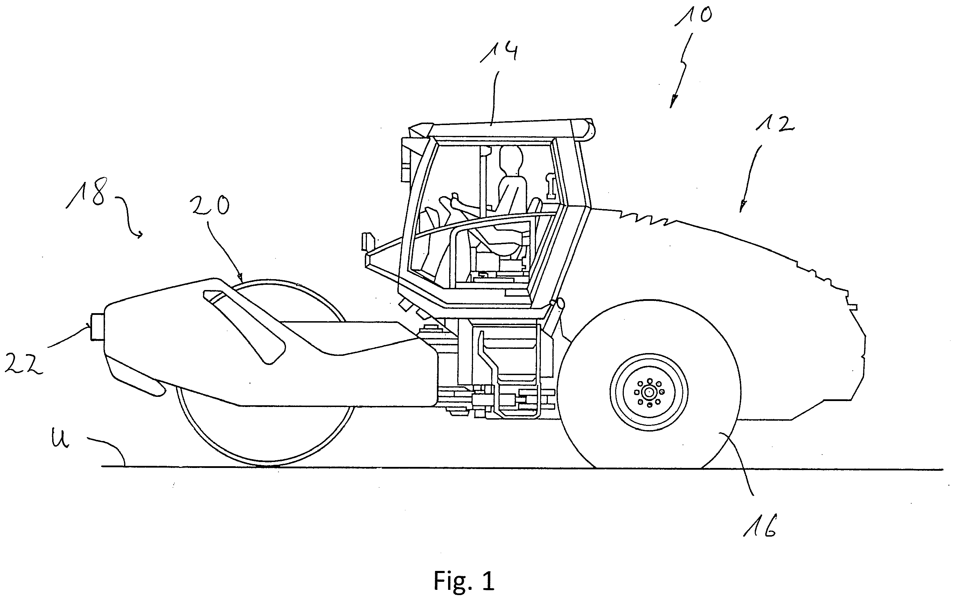

In Fig. 1 ist eine auf einem Untergrund U verfahrbare Arbeitsmaschine in Form eines selbstfahrenden Bodenverdichters 10 dargestellt. Der Bodenverdichter 10 umfasst einen Hinterwagen 12, an welchem ein Antriebsaggregat, ein Bedienstand 14 und angetriebene Räder 16 vorgesehen sind. An einem mit dem Hinterwagen 12 schwenkbar verbundenen Vorderwagen 18 ist eine Verdichterwalze 20 vorgesehen, mit welcher der von dem Bodenverdichter 10 überfahrene Untergrund U verdichtet wird. Es ist darauf hinzuweisen, dass ein derartiger Bodenverdichter 10 in verschiedenster Weise ausgeführt sein kann. So kann beispielsweise auch am Hinterwagen 12 eine Verdichterwalze 20 vorgesehen sein. Weiter kann ein derartiger Bodenverdichter beispielsweise am Hinterwagen eine Mehrzahl von nebeneinander angeordneten und in ihrer Gesamtheit als Verdichterwalze wirkenden Räder aufweisen.

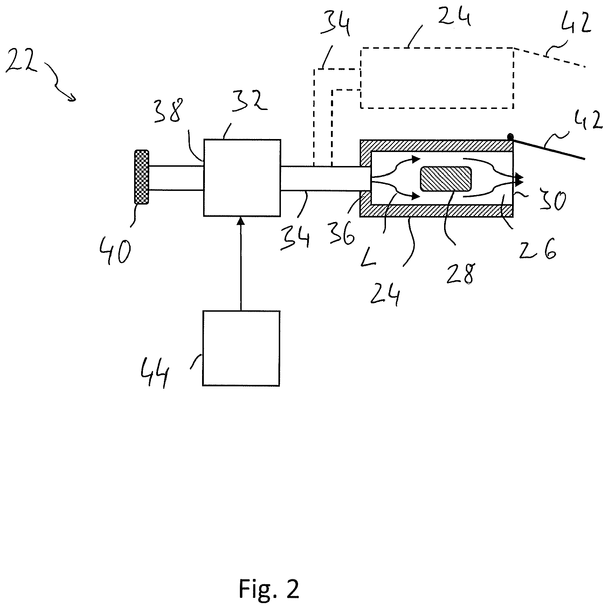

An dem Bodenverdichter ist eine allgemein mit 22 bezeichnete Sensoranordnung vorgesehen. Diese in Fig. 2 detaillierter dargestellte Sensoranordnung 22 umfasst ein oder mehrere Sensorgehäuse 24 mit einem darin ausgebildeten Sensoraufnahmeraum 26. Im Sensoraufnahmeraum 26 jedes Sensoraufnahmegehäuses 24 ist zumindest ein Sensor 28 angeordnet. Über eine am Sensorgehäuse 24 gebildete Erfassungsöffnung 30 ist der Sensoraufnahmeraum 26 zur Umgebung hin offen, so dass der im Sensoraufnahmeraum 26 angeordnete Sensor 28 über die Erfassungsöffnung 30 in Wechselwirkung mit der von diesem zu erfassenden bzw. abzutastenden Umgebung treten kann.

Beispielsweise kann der oder zumindest einer der Sensoren 28 als Temperatursensor ausgebildet sein, der die Temperatur des Untergrunds U vor dem Bodenverdichter 10 erfasst. Dazu kann der Sensor 28 beispielsweise als optischer Sensor, insbesondere Infrarotsensor, ausgebildet sein und die von diesem bereitgestellte Temperaturinformation zu einer in den Figuren nicht dargestellten Auswerteeinheit leiten, in welcher diese Temperaturinformation ausgewertet wird und beispielsweise bei der Durchführung eines Bodenverdichtungsvorgangs berücksichtigt wird.

Durch eine beispielsweise als Kompressor, Gebläse oder Ventilator ausgebildete Luftzuführanordnung 32 wird ein Luftstrom L erzeugt, welcher dem bzw. jedem Sensorgehäuse 24 über eine Luftzuführleitung 34 zugeführt werden kann. Alternativ könnte die Luftzuführanordnung 32 auch baulich mit zumindest einem Sensorgehäuse 24 verknüpft sein und den Luftstrom L direkt in den in diesem Sensorgehäuse 24 gebildeten Sensoraufnahmeraum 26 einleiten.

Die Einleitung des Luftstroms L erfolgt vorzugsweise im Bereich einer der Erfassungsöffnung 30 gegenüberliegenden Rückwand 36 des Sensorgehäuses 24. Der in dem Sensoraufnahmeraum 26 eingeleitete Luftstrom L umströmt den im Sensoraufnahmeraum 26 positionierten Sensor 28 und trägt somit im Bereich des Sensors 28 bzw. im Sensoraufnahmeraum 26 sich ansammelnde Verunreinigungspartikel aus dem Sensoraufnahmeraum 26 heraus bzw. verhindert, dass vor der Erfassungsöffnung 30 vorhandene Verunreinigungspartikel in den Sensoraufnahmeraum 26 eindringen können.

Um zu verhindern, dass mit dem von der Luftzuführanordnung 32 generierten Luftstrom L Verunreinigungspartikel in das bzw. die Sensorgehäuse 24 eingetragen werden, kann einem Ansaugbereich 38 der Luftzuführanordnung 32 ein Luftfilter 40 zugeordnet sein.

Die Fig. 2 zeigt ferner, dass zumindest einem, vorzugsweise jedem Sensorgehäuse 24 eine Abschlussklappe 42 zugeordnet ist. Diese kann am Sensorgehäuse 24 schwenkbar getragen sein und in eine die Erfassungsöffnung 30 dieses Sensorgehäuses 24 abschließende Schließstellung vorgespannt sein. Bei der in Fig. 2 dargestellten Positionierung, bei welcher das Sensorgehäuse 24 im Wesentlichen horizontal positioniert ist bzw. die Erfassungsöffnung 30 im Wesentlichen vertikal sich erstreckend angeordnet ist, kann zum Vorspannen der Abschlussklappe 42 in die Schließstellung die auf die Abschlussklappe 42 wirkende Schwerkraft genutzt werden, wenn diese in einem Bereich über der Erfassungsöffnung 30 am Sensorgehäuse 24 schwenkbar getragen ist. Alternativ oder zusätzlich kann ein Vorspannorgan, wie z. B. eine Vorspannfeder, beispielsweise Schenkelfeder, vorgesehen sein, durch welche die Abschlussklappe 42 in ihre Schließstellung vorgespannt wird. Das Verwenden eines derartigen Vorspannorgans ist insbesondere dann vorteilhaft, wenn das Sensorgehäuse 24 mit nach unten oder schräg nach unten orientierter Erfassungsöffnung 30 angeordnet ist, beispielsweise um den Untergrund im Bereich einer Arbeitsmaschine, beispielsweise des in Fig. 1 dargestellten Bodenverdichters 10, abzutasten.

Zum Verstellen der Abschlussklappe 42 in die in Fig. 2 dargestellte Offenstellung, in welcher die Erfassungsöffnung 30 freigegeben ist und somit der Sensor 28 in Wechselwirkung mit der durch diesen zu erfassenden Umgebung treten kann, wird der von der Luftzuführanordnung 32 generierte Luftstrom L genutzt, um aufgrund des im Bereich der Erfassungsöffnung 30 entstehenden Staudrucks eine die Abschlussklappe 42 aus ihrer Schließstellung in die in Fig. 2 dargestellte Offenstellung verschwenkende Kraft zu erzeugen. Somit ist gewährleistet, dass immer dann, wenn die Luftzuführanordnung 32 nicht zum Erzeugen des Luftstroms L aktiviert ist, die Abschlussklappe 42 selbsttätig in ihre Schließstellung gelangt und somit das Eindringen von Verunreinigungen in den zugeordneten Sensoraufnahmeraum 26 verhindert.

Die Luftzuführanordnung 32 kann unter der Ansteuerung einer Ansteuereinheit 44 stehen. Diese kann dazu ausgebildet sein, die Luftzuführanordnung 32 dann zum Erzeugen des Luftstroms L zu aktivieren, wenn beispielsweise das am Hinterwagen 12 vorgesehene Antriebsaggregat, beispielsweise eine Diesel-Brennkraftmaschine, in Betrieb gesetzt wird. Alternativ kann vorgesehen sein, dass die Luftzuführanordnung 32 durch die Ansteuereinheit 44 dann aktiviert wird, wenn eine in der Verdichterwalze 20 vorgesehene Vibrationsanordnung oder Oszillationsanordnung in Betrieb gesetzt wird, da dies ein Indikator dafür ist, dass der Bodenverdichter 10 beginnt, den Untergrund U zu verdichten. Alternativ oder zusätzlich kann auch beispielsweise im Bereich des Bedienstands 14 ein Schalter vorgesehen sein, durch welchen eine den Bodenverdichter 10 steuernde Bedienperson manuell die Luftzuführanordnung 32 aktivieren bzw. auch deaktivieren kann.

Abschließend ist darauf hinzuweisen, dass die Sensoranordnung 22 in verschiedensten Aspekten variiert werden kann. So können beispielsweise an einer Arbeitsmaschine an verschiedenen Bereichen derartige Sensorgehäuse 24 verteilt angeordnet sein, um in Zuordnung zu verschiedenen Arbeitsrichtungen die Möglichkeit zu schaffen, die Umgebung um die Arbeitsmaschine abzutasten. Sind mehrere Sensorgehäuse 24 vorgesehen, können diese durch eine gemeinsame Luftzuführanordnung 32 gespeist werden, so wie dies in Fig. 2 angedeutet ist. Alternativ ist es möglich, in Zuordnung zu verschiedenen Sensorgehäusen 24 auch verschiedene Luftzuführanordnungen 32 vorzusehen oder/und Ventilanordnungen vorzusehen, um beispielsweise nur in Zuordnung zu dem oder denjenigen Sensorgehäusen 24 einen Luftstrom L zu erzeugen, deren Sensoren 28 bei Durchführung eines Arbeitsvorgangs aktiv sein sollen. Auch können beispielsweise in einem Sensorgehäuse 24 mehrere Sensoren 28 angeordnet sein und verschiedene Sensorgehäuse 24 können zueinander baulich unterschiedlich gestaltet bzw. mit unterschiedlichen Arten von Sensoren 28, wie z. B. Temperatursensoren, Luftdrucksensoren, Luftfeuchtigkeitssensoren oder dergleichen, sowie auch unterschiedlichen Anzahlen von Sensoren ausgestattet sein. Ferner können in einem Sensorgehäuse 24 mehrere Sensoraufnahmeräume 26 vorgesehen sein, wobei jeder dieser Sensoraufnahmeräume 26 einen oder mehrere Sensoren 28, beispielsweise Sensoren verschiedener Art, enthalten kann. Einem oder mehreren dieser Sensoraufnahmeräume 26 bzw. der jeweiligen Erfassungsöffnung 30 derselben kann jeweils eine Abschlusskappe 42 zugeordnet sein.

## Patentansprüche

1. Auf einem Untergrund verfahrbare Arbeitsmaschine, umfassend eine Sensoranordnung (22), wobei die Sensoranordnung (22) umfasst:
- wenigstens ein Sensorgehäuse (24) mit einem über eine Erfassungsöffnung (30) offenen Sensoraufnahmeraum (26),
- wenigstens einen in dem Sensoraufnahmeraum (26) des wenigstens einen Sensorgehäuses (24) angeordneten Sensor (28),
- wenigstens eine Luftzuführanordnung (32) zum Erzeugen eines den Sensoraufnahmeraum (26) in dem wenigstens einen Sensorgehäuse (24) durchströmenden Luftstroms (L).

2. Arbeitsmaschine nach Anspruch 1,
**dadurch gekennzeichnet, dass** die wenigstens eine Luftzuführanordnung (32) umfasst:
- einen Kompressor,
oder
- ein Gebläse,
oder
- einen Ventilator.

3. Arbeitsmaschine nach Anspruch 1 oder 2,
**dadurch gekennzeichnet, dass** einem Ansaugbereich (38) der wenigstens einen Luftzuführanordnung (32) ein Luftfilter (40) zugeordnet ist.

4. Arbeitsmaschine nach einem der vorangehenden Ansprüche,
**dadurch gekennzeichnet, dass** wenigstens ein Teil des den Sensoraufnahmeraum (26) durchströmenden Luftstroms (L), vorzugsweise der gesamte den Sensoraufnahmeraum (26) durchströmende Luftstrom (L), den Sensoraufnahmeraum (26) über die Erfassungsöffnung (30) verlässt.

5. Arbeitsmaschine nach einem der vorangehenden Ansprüche,
**dadurch gekennzeichnet, dass** der wenigstens eine in dem Sensoraufnahmeraum (26) angeordnete Sensor (28) wenigstens bereichsweise von dem Luftstrom (L) umströmbar ist.

6. Arbeitsmaschine nach einem der vorangehenden Ansprüche,
**dadurch gekennzeichnet, dass** dem wenigstens einen Sensorgehäuse (24) eine Abschlussklappe (42) zum Verschließen der Erfassungsöffnung (30) zugeordnet ist.

7. Arbeitsmaschine nach Anspruch 6,
**dadurch gekennzeichnet, dass** die Abschlussklappe (42) in eine die Erfassungsöffnung (30) verschließende Schließstellung vorgespannt ist und durch den Luftstrom (L) in eine die Erfassungsöffnung (30) freigebende Offenstellung verstellbar ist.

8. Arbeitsmaschine nach Anspruch 7,
**dadurch gekennzeichnet, dass** die Abschlussklappe (42) durch ein Vorspannorgan, vorzugsweise Vorspannfeder, oder/und durch Schwerkraft in die Schließstellung vorgespannt ist.

9. Arbeitsmaschine nach einem der vorangehenden Ansprüche,
**dadurch gekennzeichnet, dass** wenigstens ein Sensor (28) ein Temperatursensor ist.

10. Arbeitsmaschine nach einem der vorangehenden Ansprüche,
**dadurch gekennzeichnet, dass** die Arbeitsmaschine ausgebildet ist als:
- Bodenbearbeitungsmaschine, wie zum Beispiel Bodenverdichter (10), Bodenfräse oder Asphaltiermaschine,
- landwirtschaftliche Maschine, wie zum Beispiel Traktor, Mähdrescher oder Häckselmaschine.
